# EUROPEAN PATENT SPECIFICATION

(11) **EP 2 684 976 B1**
(45) Date of publication and mention of the grant of the patent: **13.10.2021**
(21) Application number: 13175928.4
(22) Date of filing: 10.07.2013
(51) Int. Cl.: C23C 10/00, C23C 28/00, C23C 10/02, C23C 10/38, C23C 10/60, F01D 5/28

(54) **TURBINE BLADE AND METHOD OF FORMING THEREOF**
TURBINENSCHAUFEL UND VERFAHREN ZUR HERSTELLUNG DAVON
AUBE DE TURBINE ET PROCÉDÉ DE SA PRODUCTION

(30) Priority: 10.07.2012 JP 2012154401
(43) Date of publication of application: 15.01.2014
(73) Proprietor: Mitsubishi Power, Ltd., Yokohama 220-8401 (JP); National University Corporation Hokkaido University, Sapporo-shi, Hokkaido 060-0808 (JP)
(72) Inventor: Izumi, Takeshi, Tokyo, 100-8220 (JP); Arikawa, Hideyuki, Tokyo, 100-8220 (JP); Kojima, Yoshitaka, Tokyo, 100-8220 (JP); Mebata, Akira, Tokyo, 100-8220 (JP); Kasuya, Tadashi, Tokyo, 100-8220 (JP); Narita, Toshio, Hokkaido, 060-0808 (JP)
(74) Representative: Beetz & Partner mbB

(56) References cited:
- EP-A2- 2 377 683
- JP-A- H09 272 933
- JP-A- 2003 253 423
- US-A1- 2009 274 927
- US-A1- 2009 317 658
- None

## Description

### TECHNICAL FIELD:

The present invention relates to a turbine blade and a method of forming thereof.

### BACKGROUND ART:

In gas turbines, there has been an increasing trend for higher combustion gas temperatures for improved efficiency. For materials of turbine blades and nozzles, directional solidification alloys, and single crystal alloys having high heat-resistant temperature have been developed as replacements for common polycrystalline alloys. However, the combustion gas temperature already exceeds the melting points of such blade materials, and it is now common to form a thermal barrier coating (TBC) on substrate surfaces of turbine blades and nozzles, in addition to using various cooling techniques.

The TBC is configured from a top coat as a thermal barrier, and a bond coat for providing oxidation resistance and corrosion resistance. Oxides of low coefficient of thermal conductivity are used for the top coat, and yttria stabilized zirconia (YSZ), in which the crystalline structure is made stable by addition of yttria is widely used. For the bond coat, MCrAlY alloys (M is at least one of Ni, Co, and Fe), and aluminides such as Ni-Al, and Ni-Al-Pt are used.

The bond coat forms a thermal grown oxide (TGO) on the surface, and protects the substrate from oxidative and corrosive environment. Because alumina is preferably used for the TGO, the bond coat typically has a higher Al concentration than the substrate. On the other hand, diffusion of Al from the bond coat to the substrate is promoted, and formation of an altered layer which is called a secondary reaction zone (SRZ) in the substrate surface has become apparent along with the increasing trend for higher combustion temperatures. In the SRZ, a precipitated phase is generated in abundance, and the structure greatly differs from the original alloy structure. These are detrimental to mechanical property important for gas turbine blades such as creep strength and fatigue strength.

As a countermeasure, International Publication WO2008/059971 (Patent Document 1) discloses a method for suppressing element diffusion into a substrate during high-temperature use with the use of a multilayer alloy coating configured from a stabilizing layer, and a diffusion barrier layer formed of a Re-containing alloy.

In the process for producing a heat-resistant alloy member that includes the multilayer alloy coating described in Patent Document 1, the diffusion barrier layer is deposited by plating and heat treatment, and this is followed by a solution heat treatment and an aging treatment to control structure of the substrate, and to stabilize structure of the multilayer alloy coating.

From the standpoint of preventing element diffusion into the substrate, the diffusion barrier layer is described as being desirably formed as a continuous layer in the producing process of Patent Document 1.

Japanese Patent No. 3559670 (Patent Document 2) describes a Ni-based single crystal alloy consisting essentially of 0.06 to 0.08% of C, 0.016 to 0.035% of B, 0.2 to 0.3% of Hf, 6.9 to 7.3% of Cr, 0.7 to 1.0% of Mo, 7.0 to 9.0% of W, 1.2 to 1.6% of Re, 8.5 to 9.5% of Ta, 0.6 to 1.0% of Nb, 4.9 to 5.2% of Al, 0.8 to 1.2% of Co, and the balance being Ni and incidental impurities by weight.

US 2009/0274927 A1 discloses a multilayer alloy coating film which comprises a barrier layer formed on a base surface and an aluminum reservoir layer formed on the barrier layer. This document suggests forming the barrier layer as a continuous film.

US 2009/0317658 A1 discloses an alloy coating film which introduces one or more second phases different from the σ phase into the diffusion barrier layer to avoid appearing the discontinuity in the layer.

JP H09 272933 discloses a high strength Ni-base alloy for directional solidification.

### SUMMARY OF THE INVENTION:

An object of the present invention is to provide a turbine blade for an industrial gas turbine which can overcome a rapid propagation of cracking problem in the conventional diffusion barrier layer. An additional object of the present invention is to provide a method of forming the aforementioned turbine blade.

The above objects are accomplished by the independent claims 1 and 6.

A turbine blade for an industrial gas turbine of the present invention includes an Ni-based single crystal alloy which is prepared by adding grain boundary enhancing elements such as C, B, and Hf, and having a large acceptable crystal orientation difference for heterocrystals of different orientations from single crystals.

The present invention can prevent element diffusion into the substrate with the use of the diffusion barrier layer, and improve durability against thermal fatigue due to thermal cycles and durability against mechanical fatigue. Thus the present invention makes it possible to improve the strength reliability of the turbine blade for industrial gas turbine, and increase the lifetime of the turbine blade for industrial gas turbine.

### BRIEF DESCRIPTION OF THE DRAWINGS:

FIG. 1 is a flowchart showing procedures of a multilayer alloy coating deposition method of Example.
FIG. 2A is a cross sectional view schematically illustrating a TBC including diffusion barrier layers of Example.
FIG. 2B is a cross sectional view schematically illustrating a TBC including diffusion barrier layers of Example.
FIG. 3 is a SEM image showing a cross section of a barrier layer of a TBC including diffusion barrier layers of an Example.
FIG. 4 is a SEM image showing a cross section of the TBC including diffusion barrier layers of the Example after a heat testing.
FIG. 5 is a SEM image showing a cross section of the TBC including diffusion barrier layers of the Example after a thermal cycle testing.
FIG. 6 is a SEM image showing a cross section of a TBC including a multilayer alloy coating of a Comparative Example after the thermal cycle testing.
FIG. 7A is a partial cross sectional view illustrating a turbine blade for industrial gas turbine.
FIG. 7B is a partially enlarged cross sectional view illustrating details of portion A of FIG. 7A.

### DETAILED DESCRIPTION OF THE PREFERRED EMBODIMENTS:

Turbine blades for industrial gas turbine experience thermal fatigue caused by fluctuations of thermal stress due to thermal cycles during operation and upon shutdown. The present inventors conducted an element test for a test piece, and confirmed that a multilayer alloy coating deposited by using the method described in Patent Document 1 undergoes horizontal cracking in its brittle diffusion barrier layer and at the interface of the diffusion barrier layer under thermal cycle conditions. A problem of the continuous diffusion barrier layer, then, is the rapid propagation of cracking.

One characteristic of turbine blades for industrial gas turbine is that they require more long-term durability than turbine blades for aircraft, and it is important to maintain the alloy structure over a long lifetime, and to prevent generation of heterocrystals, particularly in single-crystal gas turbine blades.

In the present invention, the Ni-based single crystal alloy described in Patent Document 2 is materially suited as the material of a large single-crystal blade, the alloy being prepared by adding grain boundary enhancing elements such as C, B, and Hf, and having a large acceptable crystal orientation difference for heterocrystals of different orientations from single crystals. In the following, such an alloy will be referred to as a single crystal alloy for use in the present invention.

Applying the diffusion barrier layer-containing multilayer alloy coating of Patent Document 1 to a turbine blade for industrial gas turbine formed of the single crystal alloy for use in the present invention is effective in suppressing the growth of the secondary reaction zone due to element diffusion into the substrate at high temperature. The downside, however, is that the diffusion barrier layer is damaged under the thermal fatigue caused by thermal cycles during operation and upon shutdown considered important in gas turbine blades, and under the fatigue caused by changes in mechanical stress. This is detrimental to effectiveness, and has the risk of promoting cracking in the diffusion barrier layer.

The present invention has been completed over the foregoing problems, and it is an object of the present invention to provide a thermal barrier coating structure that includes a diffusion barrier layer and for use in single-crystal turbine blades for industrial gas turbine formed of a single crystal alloy for use in the present invention, and that can suppress the growth of the secondary reaction zone due to element diffusion into the substrate, and can provide durability against thermal fatigue due to thermal cycles, and durability against mechanical fatigue.

The present inventors conducted intensive studies to solve the foregoing problems, and found that the problems can be solved by forming a discontinuous multilayer diffusion barrier layer. The present invention was completed on the basis of this finding.

An embodiment of the present invention (hereinafter, also referred to as "the present embodiment" as appropriate) is described below in detail.

A turbine blade for industrial gas turbine of an embodiment of the present invention has a structure that includes a diffusion barrier layer-containing multilayer alloy coating, a bond coat, and a top coat directly and sequentially laminated on a surface of a blade substrate formed of a single crystal alloy which consists essentially of 0.06 to 0.08% of C, 0.016 to 0.035% of B, 0.2 to 0.3% of Hf, 6.9 to 7.3% of Cr, 0.7 to 1.0% of Mo, 7.0 to 9.0% of W, 1.2 to 1.6% of Re, 8.5 to 9.5% of Ta, 0.6 to 1.0% of Nb, 4.9 to 5.2% of Al, 0.8 to 1.2% of Co, and the balance being Ni and incidental impurities by weight, in which the diffusion barrier layer is a multilayer and a discontinuous layer.

In the turbine blade for industrial gas turbine, the diffusion barrier layer is an alloy that contains Re, Cr, and Ni.

As used herein, for example, "0.06% or more to 0.08% or less" has the same meaning as "0.06% or more and 0.08% or less", and can also be recited as "0.06 to 0.08%". The same applies to all the other numerical ranges recited herein.

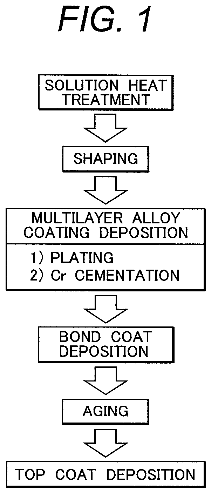

The step of forming the diffusion barrier layer-containing multilayer alloy coating and the TBC on the single crystal alloy for use in the present invention in a diffusion barrier deposition method of an embodiment of the present invention is performed according to the following procedures, as shown in FIG. 1.
(1) The substrate is subjected to a solution heat treatment (solution heat treatment step).
(2) The substrate is processed into a blade shape (shaping step).
(3) The diffusion barrier layer-containing multilayer alloy coating is deposited on the substrate (multilayer alloy coating deposition step).
   The multilayer alloy coating deposition step includes a plating step and a Cr cementation step. The multilayer alloy coating deposition step is also referred to as a "barrier deposition step".
(4) The bond coat is deposited on the diffusion barrier layer-containing alloy coating (bond coat deposition step).
(5) The substrate is aged with the diffusion barrier layer-containing multilayer alloy coating and the bond coat deposited thereon (aging step).
(6) The top coat is deposited on the bond coat (top coat deposition step).

The steps (4) to (6) are also collectively referred to as a "TBC deposition step".

Each step is described below.

### (Barrier Deposition Step)

The diffusion barrier-containing multilayer alloy coating of the embodiment of the present invention includes a diffusion barrier layer and an interlayer, the diffusion barrier layer being directly in contact with the substrate surface of the single crystal alloy for use in the present invention. When depositing the TBC by using thermal spray, a protective layer may be inserted to protect the diffusion barrier layer from the impact of thermal spray.

Various techniques can be used for the deposition method. First, a metal coating of Ni, Re-Ni, and Ni-W is formed on the blade substrate surface, using electrolytic plating and nonelectrolytic plating. In the embodiment of the present invention, the diffusion barrier layer is a Re-containing alloy, and contains Cr as another metallic element. As such, a Cr cementation process is performed to cause the Cr to react with the metal coating deposited on the blade substrate surface, depositing the multilayer alloy coating that contains the diffusion barrier layer of a Re-containing alloy.

The multilayer alloy coating deposition method described in Patent Document 1 teaches a Cr cementation process performed at about 1, 300°C to make the diffusion barrier layer continuous, and to smooth the interface. The publication also describes a solution heat treatment and an aging treatment preferably performed after the deposition of the multilayer alloy coating to control the substrate structure, reduce defects in the multilayer alloy coating, and smooth the layer interface.

On the other hand, in the embodiment of the present invention, the Cr cementation process temperature is set at or below the substrate aging temperature to discontinuously form the diffusion barrier layer in a form reflecting the discontinuous portion (discontinuous area) that occurs in the Re-Ni metal coating deposited by plating.

As used herein, "discontinuous area" refers to portions where the interlayer component has entered the diffusion barrier layer.

The aging temperature for the single crystal alloy for use in the present invention ranges from 800°C to 1,150°C, and can suppress deterioration of the substrate structure.

The thickness of the diffusion barrier layer is not particularly limited, and is desirably 1 to 5 microns (µm) to enable the diffusion barrier layer of a Re-containing alloy of a high melting point to be easily formed at a temperature not greater than the substrate aging temperature, and to make the diffusion barrier layer more discontinuous. With a thickness of 5 microns or more, the diffusion barrier layer tends to become continuous, whereas the effect of suppressing diffusion becomes insufficient with a thickness of 1 micron or less.

It is desirable that the discontinuous portion of the diffusion barrier layer occurs at 5 to 100 micron intervals, particularly 10 to 60 micron intervals. It was found in an element test conducted for a test piece by the present inventors that intervals of 5 microns or less increase the occurrence of the discontinuous portion, and are insufficient for suppressing diffusion. It was also found in a thermal cycle test that intervals of 100 microns or more cause rapid propagation of the cracking generated in the diffusion barrier layer.

The horizontal width of the discontinuous portion is desirably 0.5 to 5 microns, particularly desirably 1 to 3 microns. With a discontinuous portion width of 0.5 microns or less, the cracking generated in the diffusion barrier layer easily propagates into the adjacent diffusion barrier in a thermal cycle test. On the other hand, a discontinuous portion width of 5 microns or more is insufficient in terms of the effect of suppressing diffusion.

The number of diffusion barrier layers is not particularly limited, as long as more than one layer is provided to obtain the diffusion suppressing effect. However, 2 to 10 layers, particularly 3 to 5 layers are desirable for maintaining the effect over extended time periods even with the discontinuous diffusion barrier layers.

### (TBC Deposition Step)

The bond coat is deposited on the diffusion barrier layer-containing multilayer alloy coating after the deposition of the multilayer alloy coating.

For example, MCrAlY that exhibits excellent corrosion resistance and oxidation resistance is used as the bond coat. The thickness of the bond coat is not particularly limited, and is typically about 100 to 200 microns. Specific examples of the deposition method include low pressure plasma spray (LPPS), and high velocity oxy-fuel frame-spraying (HVOF).

The top coat is deposited on the bond coat deposited as above.

For example, yttria stabilized zirconia (YSZ ZrO2-6 to 8Y203) of low coefficient of thermal conductivity is typically used for the top coat, and the thickness of the top coat is typically about 300 to 500 microns. The top coat is normally deposited by using, for example, air plasma spray (APS) under atmospheric pressure.

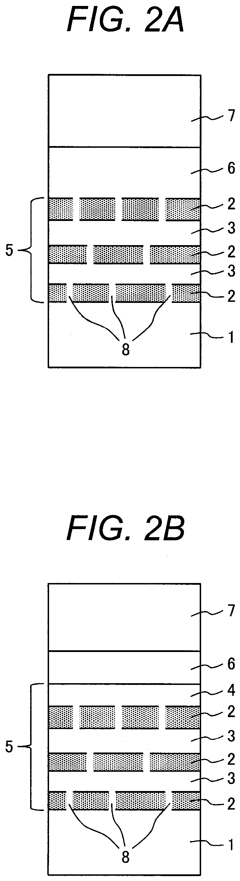

This completes the deposition of the TBC that contains the diffusion barrier layer of the embodiment of the present invention. FIGS. 2A and 2B are schematic views representing the TBC that contains the diffusion barrier layer of the embodiment of the present invention. FIG. 2A represents a configuration in which the multilayer alloy coating includes a diffusion barrier layer and an interlayer. FIG. 2B represents a configuration in which the multilayer alloy coating includes the diffusion barrier layer, the interlayer, and a protective layer.

Referring to FIG. 2A, an alloy coating 5 containing diffusion barrier layers 2 (multilayer alloy coating), a bond coating 6, and a top coating 7 are formed in order on a surface of a substrate 1. The alloy coating 5 is a laminate in which the diffusion barrier layers 2 and interlayers 3 are alternately disposed. The diffusion barrier layers 2 include a discontinuous area 8. The discontinuous area 8 is configured from the component of the interlayer 3.

Referring to FIG. 2B, a protective layer 4 is provided in a portion of the alloy coating 5 in contact with the bond coat 6.

Examples of the present invention are described below.

### [Example 1]

A single crystal alloy for use in the present invention preferred for a gas turbine member was cast into a rod shape, and was subjected to a solution heat treatment in a vacuum atmosphere under the following multi-stage heating conditions. 1,250°C·4h → 1,260°C·4h → 1,270°C·4h → 1,280°C·4h

The rod-shaped casting material after the solution heat treatment was processed into a test piece (diameter 1 inch; thickness 3 mm) to obtain a substrate. In this example, the barrier deposition was performed by using plating, and thus the surface was pretreated by being wet polished with a #600 wet abrasive paper, and degreased with acetone.

The multilayer plating film was deposited on the washed substrate surface in the following order.
(1) Ni plating: thickness, 2 microns
(2) Re-Ni plating: thickness, 2 microns
(3) Ni-W plating: thickness, 2 microns
(4) Re-Ni plating: thickness, 2 microns
(5) Ni-W plating: thickness, 2 microns
(6) Re-Ni plating: thickness, 2 microns
(7) Ni plating: thickness, 10 microns

In this example, the plating deposition of the multilayer plating film on the substrate surface was followed by a Cr cementation process. Specifically, the test piece was buried in a processing powder (Al₂O₃-15Cr-5NH₄Cl mass%) in an Ar atmosphere, and held for 4 hours at a heating temperature, for which the aging temperature 1,120°C of the single crystal alloy for use in the present invention was selected.

The Ni plating film (1) was inserted to improve the adhesion between the single crystal substrate and the Re-Ni plating film (2), and reacts with the Re-Ni plating film (2) in the Cr cementation process, upon which the Ni plating film (1) becomes a part of the diffusion barrier layer and disappears. The Ni plating film (7) reacts with the Re-Ni plating film (6), and becomes a part of the diffusion barrier layer. When the TBC is deposited by using thermal spray, the Ni plating film (7) becomes the protective layer for protecting the diffusion barrier layer from the impact. The Cr cementation process forms a multilayer alloy coating structure in which two interlayers are interposed between three diffusion barrier layers.

After the deposition of the diffusion barrier layer-containing multilayer alloy coating as above, the bond coat was thermal sprayed on the test piece of the single crystal alloy for use in the present invention. As a pretreatment for thermal spray, blasting for improving adhesion was performed with alumina particles of grain size 24 under pressure of 5 kgf/cm².

A commercially available CoNiCrAlY (Co-32Ni-21Cr-8Al-0.5Y mass%) powder was used for the bond coat. As expected, various techniques can be used for the deposition method. However, in this example, the bond coat was deposited on the multilayer alloy coating in about 150 microns by using high velocity oxy-fuel frame-spraying (HVOF) and low pressure plasma spray (LPPS).

The thermal spray of the bond coat was followed by a heat treatment, which was performed in a vacuum atmosphere under the following heating conditions to improve the adhesion of the bond coat. 1,120°C·4h → 871°C·20h

After the aging treatment, the top coating was formed in about 300 microns by the atmospheric plasma spraying (APS) of commercially available yttria stabilized zirconia (YSZ).

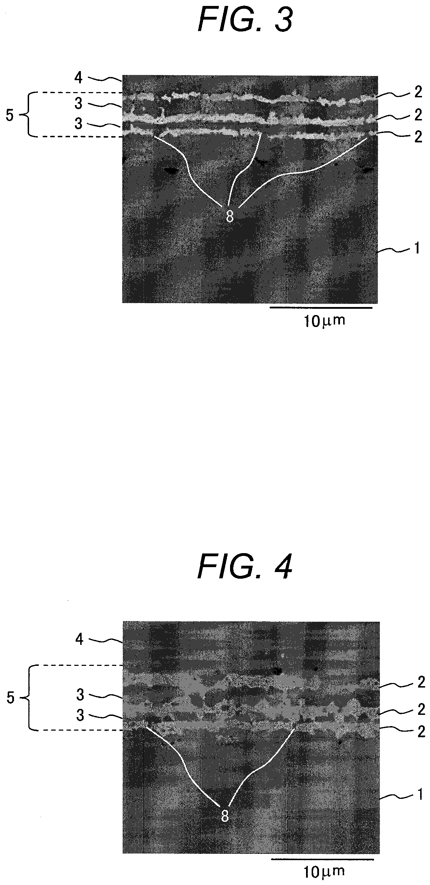

FIG. 3 is a magnified view in the vicinity of the barrier layer of the TBC that includes the diffusion barrier layer-containing multilayer alloy coating of the embodiment of the present invention prepared as above.

Referring to FIG. 3, an alloy coating 5 is present that includes two interlayers 3 and three diffusion barrier layers 2. The diffusion barrier layers 2 have the discontinuous area 8.

The effect of the diffusion barrier layer obtained according to the embodiment of the present invention was investigated by conducting a heat test at 1,050°C for 500 hours.

FIG. 4 is a SEM image of a cross sectional structure after the heat testing of the TBC that includes the diffusion barrier layer-containing multilayer alloy coating of the embodiment of the present invention.

After the heat test, a common TBC with no diffusion barrier layer had a deteriorative layer (or SRZ) in which the precipitated phase was formed in abundance by diffusion into the substrate. On the other hand, in the TBC with the multilayer alloy coating 5 containing the diffusion barrier layers 2 according to the embodiment of the present invention (FIG. 4), the barrier effect was sufficiently maintained, and the SRZ was not observed, because the diffusion barrier layers 2 were provided as multiple layers to reduce the diffusion cross sectional area although the diffusion barrier layers 2 being discontinuous.

As demonstrated above, the TBC having the diffusion barrier layer-containing multilayer alloy coating of the embodiment of the present invention had a confirmed effect as the barrier layer. The TBC was further evaluated for durability by conducting a thermal cycle test that involved heating and cooling.

The thermal cycle test involved repeated heating and cooling between room temperature and 1,093°C, and was performed in 100 cycles, each cycle consisting of holding at room temperature for 15 min, and at 1,093°C for 10 hours.

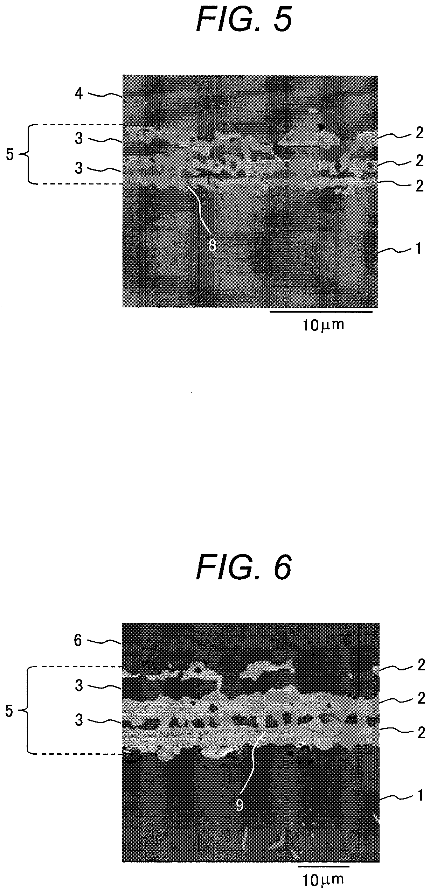

FIG. 5 is a SEM image of a cross sectional structure after the thermal cycle testing of the TBC having the diffusion barrier layer-containing multilayer alloy coating of the embodiment of the present invention.

The TBC with the multilayer alloy coating 5 containing the diffusion barrier layers 2 according to the embodiment of the present invention had partial decomposition in the diffusion barrier layers 2 after the prolonged heating. However, the diffusion barrier layers 2 did not show any damage such as cracking and exfoliation caused by stress that occurred during the temperature changes.

This is because of the effect of the discontinuity in the diffusion barrier layers 2, and the discontinuous area 8 relaxing the stress-induced strain and thereby suppressing the generation of cracking in the diffusion barrier layers 2. Further, any cracking can be suppressed from further propagation at the discontinuous portion although the cracking quickly propagates in the diffusion barrier layers 2.

The substrate 1 did not show any SRZ, and the diffusion barrier function was maintained by the formation of the multiple layers, even though the barrier was discontinuous.

FIG. 6 is a photographic image showing a cross section after the thermal cycle testing of a TBC containing a multilayer alloy coating deposited by using the method described in Patent Document 1 (Comparative Example).

As can be seen in FIG. 6, no SRZ was formed in the substrate 1, and the barrier function was maintained even after the thermal cycle test. However, horizontal cracking 9 was observed in the diffusion barrier layers 2, running in a straight line in the continuously formed diffusion barrier layers 2. That is, the cracking 9 rapidly propagates in the diffusion barrier layers 2 when the diffusion barrier layers 2 are continuous and do not have the discontinuous area that becomes an obstacle to the propagation of the cracking 9.

The relationship between the horizontal length of cracking and the number of thermal cycles, specifically the cracking propagation speed can be reduced to about 1/3 with the diffusion barrier layer-containing multilayer alloy coating of the embodiment of the present invention, as compared to the multilayer alloy coating deposited by using the method of Patent Document 1.

### [Example 2]

A turbine blade for industrial gas turbine formed of the single crystal alloy for use in the present invention used in Example 1 was coated with the coating of Example 1 to obtain a turbine blade for industrial gas turbine. The coating was formed on the blade surface exposed to combustion gas.

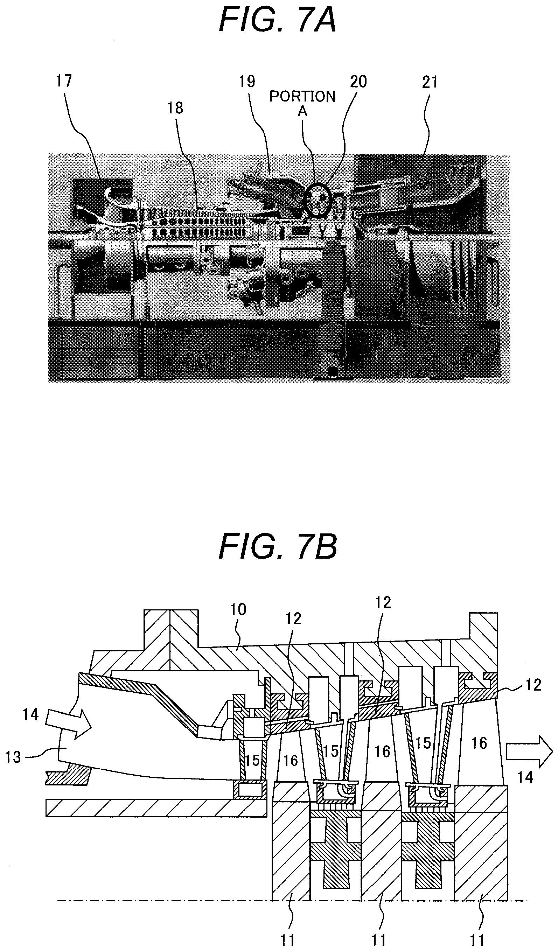

FIG. 7A schematically shows the industrial gas turbine that uses the turbine blade for industrial gas turbine of the example.

As shown in the figure, the gas turbine is configured from an air intake portion 17, a compressor 18, a combustor 19, a turbine section 20 (including blades and nozzles), and an exhaust unit 21.

FIG. 7B is a magnified cross sectional view of portion A of FIG. 7A, illustrating details of the turbine section 20 that includes blades and nozzles.

As shown in the figure, the turbine section is configured from a turbine rotor 11, a shroud 12, a combustor 13, a gas path 14, nozzles 15, and blades 16.

The turbine blade for industrial gas turbine coated with the coating of the embodiment of the present invention had improvements in durability against thermal cycles and fatigue during operation and upon shutdown, and was able to maintain the strength reliability of the gas turbine blade, making it possible to extend the lifetime of the gas turbine.

The foregoing described the present invention using specific examples. It should be noted, however, that the present invention is not limited to the embodiment above, and may be applied in many variations, provided such variations do not exceed the scope of the present invention described above.

## Claims

1. A turbine blade for an industrial gas turbine comprising:
a blade substrate (1);
a multilayer alloy coating (5) containing a plurality of diffusion barrier layers (2);
a bond coat (6); and
a top coat (7),
the multilayer alloy coating (5) being formed on a surface of the blade substrate, the bond coat (6) being formed on a surface of the multilayer alloy coating, and the top coat (7) being formed on a surface of the bond coat,
**characterized in that**
the blade substrate is formed of a single crystal alloy which consists of 0.06 to 0.08% of C, 0.016 to 0.035% of B, 0.2 to 0.3% of Hf, 6.9 to 7.3% of Cr, 0.7 to 1.0% of Mo, 7.0 to 9.0% of W, 1.2 to 1.6% of Re, 8.5 to 9.5% of Ta, 0.6 to 1.0% of Nb, 4.9 to 5.2% of Al, 0.8 to 1.2% of Co by weight, and the balance is Ni and incidental impurities, and
the diffusion barrier layers (2) include a discontinuous area (8) for relaxing a stress-induced strain in the diffusion barrier layers,
wherein each of the diffusion barrier layers is an alloy which contains Re, Cr, and Ni,
the multilayer alloy coating (5) is a laminate in which the diffusion barrier layers (2) and interlayers (3) are alternately disposed,
and the discontinuous area (8) is configured from the component of the interlayer (3) by the interlayer component having entered the diffusion barrier layer.

2. The turbine blade according to claim 1,
wherein the multilayer alloy coating (5) comprises said diffusion barrier layers (2) alternatingly stacked with interlayers (3).

3. The turbine blade according to one of the claims 1 or 2,
wherein the discontinuities area (8) in said diffusion barrier layers (2) is filled by the material of an interlayer (3).

4. The turbine blade according to one of the claims 1 to 3,
wherein the multilayer alloy coating (5) comprises a protective layer (4) in contact with the bond coat.

5. An industrial gas turbine including the turbine blade of one of claims 1 to 4.

6. A method of forming a turbine blade, comprising the steps of:
(1) subjecting a substrate (1) to a solution heat treatment, the substrate (1) being formed of a single crystal alloy consisting of 0.06 to 0.08% of C, 0.016 to 0.035% of B, 0.2 to 0.3% of Hf, 6.9 to 7.3% of Cr, 0.7 to 1.0% of Mo, 7.0 to 9.0% of W, 1.2 to 1.6% of Re, 8.5 to 9.5% of Ta, 0.6 to 1.0% of Nb, 4.9 to 5.2% of Al, 0.8 to 1.2% of Co by weight, and the balance being Ni and incidental impurities and having an aging temperature in a range from 800 °C to 1,150 °C,
(2) forming the substrate (1) into a blade shape,
(3) depositing a diffusion barrier layer-containing multilayer alloy coating (5) on the substrate (1), including a plating step and a Cr cementation step, the multilayer alloy coating (5) being a laminate in which the diffusion barrier layers (2) and the interlayers (3) are alternately disposed,
(4) depositing a bond coat (6) on the diffusion barrier layer-containing alloy coating (5),
(5) aging the substrate (1) with the diffusion barrier layer-containing multilayer alloy coating (5) and the bond coat (6) deposited thereon, and
(6) depositing the top coat on the bond coat (6),
wherein said Cr cementation step is performed at a temperature not greater than a temperature for aging the substrate (1) such that a discontinuous area (8) is formed in the diffusion barrier layer (2) of the multilayer alloy coating (5), wherein the discontinuous area (8) is configured from the component of the interlayer (3) by the interlayer component having entered the diffusion barrier layer.

## Patentansprüche

1. Turbinenschaufel für eine Industriegasturbine mit:
einem Schaufelsubstrat (1);
einem mehrschichtigen Legierungsüberzug (5), der eine Mehrzahl von Diffusionssperrschichten (2) enthält;
einer Haftschicht (6); und
einer Deckschicht (7),
wobei der mehrschichtige Legierungsüberzug (5) auf einer Oberfläche des Schaufelsubstrats ausgebildet ist, die Haftschicht (6) auf einer Oberfläche des mehrschichtigen Legierungsüberzugs ausgebildet ist und die Deckschicht (7) auf einer Oberfläche der Haftschicht ausgebildet ist,
**dadurch gekennzeichnet, dass**
das Schaufelsubstrat aus einer einkristallinen Legierung gebildet ist, die aus 0,06 bis 0,08 Gew.-% C, 0,016 bis 0,035 Gew.-% B, 0,2 bis 0,3 Gew.-% Hf, 6,9 bis 7,3 Gew.-% Cr, 0,7 bis 1,0 Gew.-% Mo, 7, 0 bis 9,0 Gew.-% W, 1,2 bis 1,6 Gew.-% Re, 8,5 bis 9,5 Gew.-% Ta, 0,6 bis 1,0 Gew.-% Nb, 4,9 bis 5,2 Gew.-% Al, 0,8 bis 1,2 Gew.-% Co und als Rest Ni und zufälligen Verunreinigungen besteht, und
die Diffusionssperrschichten (2) einen diskontinuierlichen Bereich (8) zum Entspannen einer belastungsinduzierten Dehnung in den Diffusionssperrschichten aufweisen,
wobei jede der Diffusionssperrschichten eine Legierung ist, die Re, Cr und Ni enthält,
die mehrschichtige Legierungsbeschichtung (5) ein Laminat ist, in dem die Diffusionssperrschichten (2) und Zwischenschichten (3) abwechselnd angeordnet sind,
und der diskontinuierliche Bereich (8) aus der Komponente der Zwischenschicht (3) konfiguriert ist, indem die Zwischenschichtkomponente in die Diffusionssperrschicht eingedrungen ist.

2. Turbinenschaufel nach Anspruch 1,
bei der der mehrschichtige Legierungsüberzug (5) die Diffusionssperrschichten (2) im Wechsel mit Zwischenschichten (3) umfasst.

3. Turbinenschaufel nach einem der Ansprüche 1 oder 2,
bei der der diskontinuierliche Bereich (8) in den Diffusionssperrschichten (2) durch das Material einer Zwischenschicht (3) ausgefüllt ist.

4. Turbinenschaufel nach einem der Ansprüche 1 bis 3,
bei der der mehrschichtige Legierungsüberzug (5) eine Schutzschicht (4) in Kontakt mit der Haftschicht umfasst.

5. Industriegasturbine mit der Turbinenschaufel nach einem der Ansprüche 1 bis 4.

6. Verfahren zur Herstellung einer Turbinenschaufel mit den Schritten:
(1) Unterziehen eines Substrats (1) einer Lösungsglühbehandlung, wobei das Substrat (1) aus einer einkristallinen Legierung gebildet ist, die aus 0,06 bis 0,08 Gew.-% C, 0,016 bis 0,035 Gew.-% B, 0,2 bis 0,3 Gew.-% Hf, 6,9 bis 7,3 Gew.-% Cr, 0,7 bis 1,0 Gew.-% Mo, 7,0 bis 9,0 Gew.-% W, 1,2 bis 1,6 Gew.-% Re, 8,5 bis 9,5 Gew.-% Ta, 0,6 bis 1,0 Gew.-% Nb, 4,9 bis 5,2 Gew.-% Al, 0,8 bis 1,2 Gew.-% Co und als Rest Ni und zufälligen Verunreinigungen besteht und eine Alterungstemperatur in einem Bereich von 800 °C bis 1.150 °C aufweist,
(2) Formen des Substrats (1) zu einer Schaufelform,
(3) Abscheiden eines Diffusionssperrschichten enthaltenden mehrschichtigen Legierungsüberzugs (5) auf dem Substrat (1), einschließlich eines Plattierungsschritts und eines Cr-Zementierungsschritts, wobei der mehrschichtige Legierungsüberzug (5) ein Laminat ist, in dem die Diffusionssperrschichten (2) und die Zwischenschichten (3) abwechselnd angeordnet sind,
(4) Aufbringen einer Haftschicht (6) auf dem die Diffusionssperrschichten enthaltende Legierungsüberzug (5),
(5) Altern des Substrats (1) mit dem darauf abgeschiedenen, Diffusionssperrschichten enthaltenden mehrschichtigen Legierungsüberzug (5) und der Haftschicht (6), und
(6) Aufbringen der Deckschicht auf die Haftschicht (6),
wobei der Cr-Zementierungsschritt bei einer Temperatur durchgeführt wird, die nicht höher ist als eine Temperatur zum Altern des Substrats (1), so dass ein diskontinuierlicher Bereich (8) in der Diffusionssperrschicht (2) der mehrschichtigen Legierungsbeschichtung (5) gebildet wird, wobei der diskontinuierliche Bereich (8) aus der Komponente der Zwischenschicht (3) konfiguriert ist, indem die Zwischenschichtkomponente in die Diffusionssperrschicht eingedrungen ist.

## Revendications

1. Aube de turbine pour une turbine à gaz industrielle comprenant :
un substrat d'aube (1) ;
un revêtement d'alliage multicouches (5) contenant une pluralité de couches de barrière de diffusion (2) ;
une couche de liaison (6) ; et
une couche de finition (7),
le revêtement d'alliage multicouches (5) étant formé sur une surface du substrat d'aube, la couche de liaison (6) étant formée sur une surface du revêtement d'alliage multicouche, et la couche de finition (7) étant formée sur une surface de la couche de liaison,
**caractérisé en ce que**
le substrat d'aube est formé d'un alliage monocristallin qui consiste en 0,06 à 0,08% de C, 0,016 à 0,035% de B, 0,2 à 0,3% de Hf, 6,9 à 7,3% de Cr, 0,7 à 1,0% de Mo, 7, 0 à 9,0 % de W, 1,2 à 1,6 % de Re, 8,5 à 9,5 % de Ta, 0,6 à 1,0 % de Nb, 4,9 à 5,2 % de Al, 0,8 à 1,2 % de Co en poids, le solde étant du Ni et d'impuretés accidentelles, et
les couches de barrière de diffusion (2) comprennent une zone discontinue (8) pour relaxer une déformation induite par une contrainte dans les couches de barrière de diffusion,
dans lequel chacune des couches de barrière de diffusion est un alliage qui contient du Re, du Cr et du Ni,
le revêtement d'alliage multicouches (5) est un stratifié dans lequel les couches de barrière de diffusion (2) et les couches intermédiaires (3) sont disposées en alternance,
et la zone discontinue (8) est configurée à partir du composant de la couche intermédiaire (3) par le composant de la couche intermédiaire ayant pénétré dans la couche barrière de diffusion.

2. Aube de turbine selon la revendication 1,
dans laquelle le revêtement d'alliage multicouches (5) comprend lesdites couches de barrière de diffusion (2) empilées en alternance avec des couches intermédiaires (3).

3. Aube de turbine selon l'une des revendications 1 ou 2,
dans laquelle la zone discontinue (8) dans lesdites couches de barrière de diffusion (2) est remplie par le matériau d'une couche intermédiaire (3).

4. Aube de turbine selon l'une des revendications 1 à 3,
dans laquelle le revêtement d'alliage multicouches (5) comprend une couche de protection (4) en contact avec la couche de liaison.

5. Turbine à gaz industrielle comprenant l'aube de turbine selon l'une des revendications 1 à 4.

6. Procédé de formation d'une aube de turbine, comprenant les étapes consistant à :
(1) soumettre un substrat (1) à un traitement thermique en solution, le substrat (1) étant formé d'un alliage monocristallin constitué de 0,06 à 0,08% de C, 0,016 à 0,035% de B, 0,2 à 0,3% de Hf, 6,9 à 7,3% de Cr, 0,7 à 1,0% de Mo, 7,0 à 9, 0% de W, 1,2 à 1,6 % de Re, 8,5 à 9,5 % de Ta, 0,6 à 1,0 % de Nb, 4,9 à 5,2 % d'Al, 0,8 à 1,2 % de Co en poids, et le solde étant du Ni et d'impuretés accidentelles, et ayant une température de vieillissement dans une gamme de 800 °C à 1 150 °C,
(2) former le substrat (1) en forme d'aube,
(3) déposer sur le substrat (1) un revêtement d'alliage multicouches (5) contenant une couche de barrière de diffusion, comprenant une étape de placage et une étape de cémentation au Cr, le revêtement d'alliage multicouches (5) étant un stratifié dans lequel les couches de barrière de diffusion (2) et les couches intermédiaires (3) sont disposées en alternance,
(4) déposer une couche de liaison (6) sur le revêtement d'alliage (5) contenant la couche de barrière de diffusion,
(5) faire vieillir du substrat (1) avec le revêtement d'alliage multicouche contenant la couche de barrière de diffusion (5) et la couche de liaison (6) déposées sur celui-ci, et
(6) dépôser la couche de finition sur la couche de liaison (6),
dans lequel ladite étape de cémentation est réalisée à une température qui n'est pas supérieure à une température pour le vieillissement du substrat (1) de telle sorte qu'une zone discontinue (8) est formée dans la couche de barrière de diffusion (2) du revêtement d'alliage multicouches (5), la zone discontinue (8) étant configurée à partir du composant de la couche intermédiaire (3) par le composant de la couche intermédiaire ayant pénétré dans la couche de barrière de diffusion.
